(19) Europäisches Patentamt / European Patent Office / Office européen des brevets

(11) **EP 4 406 108 B1**

(12) **EUROPEAN PATENT SPECIFICATION**

(45) Date of publication and mention
of the grant of the patent:
**16.04.2025 Bulletin 2025/16**

(21) Application number: **21782916.7**

(22) Date of filing: **22.09.2021**

(51) International Patent Classification (IPC):
*H02P 21/22* (2016.01)    *B62D 5/04* (2006.01)
*H02P 21/14* (2016.01)    *H02P 101/45* (2016.01)

(52) Cooperative Patent Classification (CPC):
**H02P 21/22; B62D 5/0481; H02P 21/14;**
B62D 5/046; B62D 5/0484; H02P 2101/45

(86) International application number:
**PCT/EP2021/075999**

(87) International publication number:
**WO 2023/046266 (30.03.2023 Gazette 2023/13)**

(54) **MOTOR CONTROL SYSTEM FOR DETERMINING AN OPERATING POINT FOR CONTROLLING AN ELECTRIC MOTOR**

MOTORSTEUERUNGSSYSTEM ZUR BESTIMMUNG EINES ARBEITSPUNKTES ZUR STEUERUNG EINES ELEKTROMOTORS

SYSTÈME DE COMMANDE DE MOTEUR POUR DÉTERMINER UN POINT DE FONCTIONNEMENT POUR COMMANDER UN MOTEUR ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2024 Bulletin 2024/31**

(73) Proprietor: HELLA GmbH & Co. KGaA
**59552 Lippstadt (DE)**

(72) Inventor: **LETOT, Jeremy**
**31300 Toulouse (FR)**

(74) Representative: **Behr-Wenning, Gregor**
**HELLA GmbH & Co. KGaA**
**Rixbecker Strasse 75**
**59552 Lippstadt (DE)**

(56) References cited:
**WO-A1-2016/198588       DE-A1- 102015 224 586**
**US-A1- 2006 055 363**

**Description**

The invention relates to a motor control system for determining an operating point for controlling an electric motor, a control system having the motor control system, an electronic system having the control system, a vehicle having the electronic system, a method for determining an operating point for controlling an electric motor, a computer program and a computer-readable data carrier.

US 2006/055363 A1 discloses a motor system comprising d-axis and q-axis look-up tables for providing d-axis and q-axis command currents for any given speed, desired torque and DC link bus voltage.

It is an object of the invention to provide a way by means of which the most optimal operating points for an electric motor operating at different speeds, torques, voltages, temperatures, etc. may be determined while still satisfying CPU load (calculation time) and memory (size of variables) constraints.

This object is solved by the subject-matter of the claims. In particular, this object is solved by a motor control system according to claim 1, a control system according to claim 5, an electronic system according to claim 7, a vehicle according to claim 10, a method according to claim 11, a computer program according to claim 14 and a computer-readable data carrier according to claim 15. Further details of the invention unfold from the other claims as well as the description and the drawings. Thereby, the features and details described in connection with the motor control system of the invention apply in connection with the control system of the invention, the electronic system of the invention, the vehicle of the invention, the method of the invention, the computer program of the invention and the computer-readable data carrier of the invention, so that regarding the disclosure of the individual aspects of the invention it is or can be referred to one another.

According to a first aspect of the invention, the above object is solved by means of a motor control system for determining an operating point for controlling an electric motor in an electric system comprising a battery and an electronic control unit.

The motor control system comprises a calibrator having an input for receiving a battery voltage of the battery and a motor (or rotor) speed and a requested torque of the electric motor, the calibrator being configured to calculate a modified speed based on the received battery voltage, motor speed and the requested torque.

The motor control system further comprises an operating point controller having an input for receiving a fixed battery voltage reference, the modified speed and the requested torque, the operating point controller being configured for determining the operating point for controlling the electric motor based on the received fixed battery voltage reference, the modified speed and the requested torque.

The identified disadvantage in the prior art is that equations are simplified in a way that all operating points are not optimum. However, using raw equations requires a computer's processor which is not reasonable for many applications, in particular automotive applications.

The invention now proposes to include a calibrator in a motor control system to change the operating point controller's inputs. The calibrator, just as the operating point controller, may be understood as modules of the motor control system, which may be implemented as computer codes, in particular algorithms, to be executed on a computer and/or as electric circuits executing their function.

The equations of the operating point controller are simplified but the calibrator will variate the inputs to oblige the operating point controller to provide the most efficient operating points. A modification of the raw equations by means of performing variables with constants and (more or less) complex functions allows to decompose the different calculations to make the whole process faster to compute.

Despite requiring (reasonable) additional CPU load (few micro-seconds) and memory (few kilo-bytes), the motor control system allows more flexibility, which could permit to choose a balance between different CPU constraints and motor control performances. All operating points can be optimized without having to upgrade the CPU.

In particular, the operating point is defined by a current to be applied through each of the phases of the electric motor.

Moreover, in particular, the motor control system further comprises a control loop configured for receiving the determined operating point, comparing the determined operating point to a measured current and output a voltage request.

Further, in particular, the electric motor is a brushless alternating current motor.

According to a second aspect of the invention, the above object is solved by means of a control system comprising the motor control system according to the first aspect of the invention, whereby the control system further comprises a power stage control system connected to the motor control system.

In particular, the power stage control system is configured to transform a voltage request received from the motor control system into duty cycles to command switches of a power stage of the electronic control unit.

According to a third aspect of the invention, the above object is solved by means of an electronic system comprising a mechanical system and an electric system, the electric system having the control system according to the second aspect of the invention.

In particular, the electronic system is an electronic vehicle system. In other words, the electronic system may be from an automotive application.

Moreover, in particular, the electronic system is an electronic power steering system. However, other applications in vehicles, such as vehicle electric traction systems, can be implemented as well.

According to a fourth aspect of the invention, the above object is solved by means of a vehicle comprising the electronic system according to the third aspect of the invention.

According to a fifth aspect of the invention, the above object is solved by means of a method for determining an operating point for controlling an electric motor in an electric system comprising a battery and an electronic control unit, the method comprising the steps of:

- receiving a battery voltage of the battery, a motor speed and a requested torque of the electric motor,
- calculating a modified speed based on the received battery voltage, motor speed and requested torque,
- receiving a fixed battery voltage reference, the modified speed and a requested torque, and
- determining the operating point for controlling the electric motor based on the received fixed battery voltage reference, the modified speed and the requested torque.

In particular, the method further comprises the steps of comparing the determined operating point to a measured current and outputting a voltage request.

Moreover, in particular, the method further comprises the steps of transforming a voltage request into duty cycles and correspondingly commanding switches of a power stage of the electronic control unit.

According to a sixth aspect of the invention, the above object is solved by means of a computer program comprising instructions which, when the program is executed by a computer, cause the computer to carry out the method according to the fifth aspect of the invention.

According to a seventh aspect of the invention, the above object is solved by means of a computer-readable data carrier having stored thereon the computer program according to the sixth aspect of the invention.

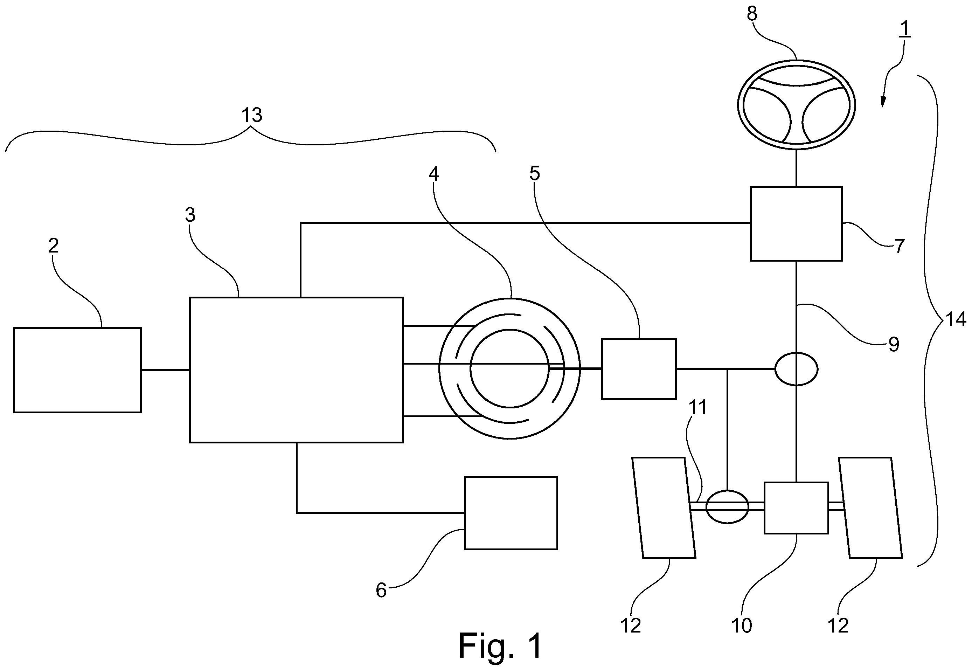

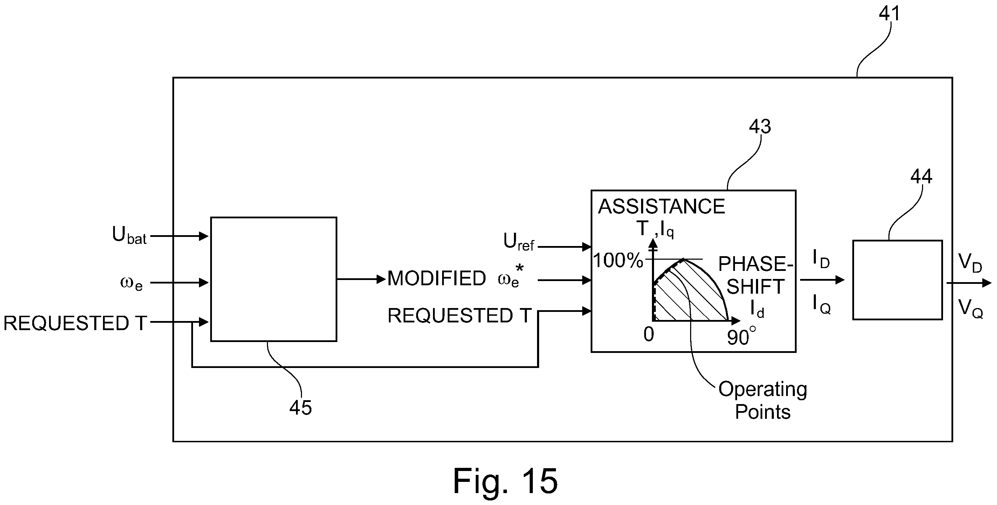

Further advantages, features and details of the invention unfold from the following description, in which by reference to drawings Figs. 1 - 16, embodiments of the present invention are described in detail. Thereby, the features from the claims as well as the features mentioned in the description can be essential for the invention as taken alone or in an arbitrary combination. In the drawings, there is schematically shown:

Fig. 1     an electronic power steering system;
Fig. 2     a vehicle having the electronic power steering system of Fig. 1;
Fig. 3     a torque-speed-graph for the electronic power steering system of Fig. 1;
Fig. 4     a further torque-speed-graph similar to Fig. 3;
Fig. 5     an electric system of the electronic power steering system of Fig. 1;
Fig. 6     a power stage of the ECU of the electronic power steering system of Fig. 1;
Fig. 7     a control system of the electronic power steering system of Fig. 1;
Fig. 8     a graph corresponding to the motor control system in the control system of Fig. 7;
Fig. 9     a further graph similar to Fig. 8;
Fig. 10    graphs of operating areas for different speeds;
Fig. 11    graphs of operating areas for different current consumptions;
Fig. 12    the graphs of Fig. 10 with optimal operating points included;
Fig. 13    graphs of operating areas with optimal operating points included and for different charge levels of the battery;
Fig. 14    a motor control system for the control system of Fig. 7;
Fig. 15    a further motor control system for the control system of Fig. 7; and
Fig. 16    further graphs of operating areas for different charge levels of the battery.

Throughout Figs. 1 - 16, alike elements are referred to with the same reference number.

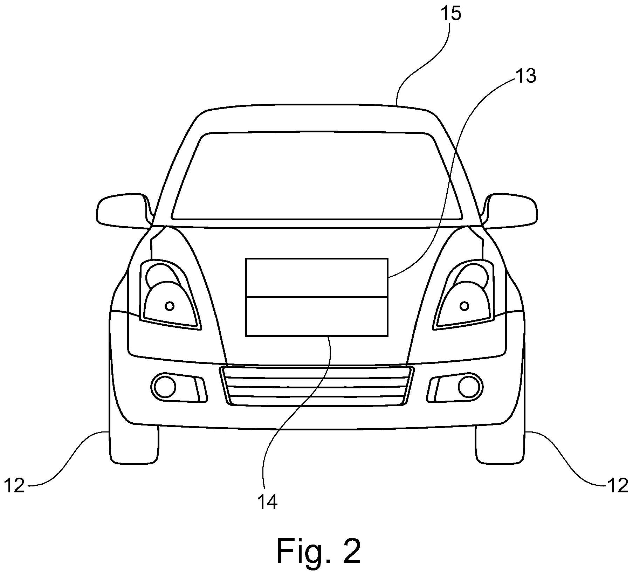

Fig. 1 depicts an electronic (vehicle) system 1 in the form of an electronic power steering (EPS) system 1 for a vehicle 15 (see Fig. 2). The electronic power steering system 1 comprises a mechanical system 14 and an electric system 13. The mechanical system 14 includes a torque sensor 7, a steering wheel 8, a column 9, a pinion 10, a rack 11 and wheels 12. The electric system 13 includes an electric motor 4, which in this case is a brushless alternating current motor (BLAC motor), a battery 2, an electronic control unit (ECU) 3 and at least one sensor, such as the depicted motor position sensor 6, thereby forming the so-called powerpack 13. A gearbox 5 of the EPS system 1 makes the junction between both systems 13, 14.

When the steering wheel 8 is rotated, the requested torque is measured by the torque sensor 7, and the powerpack 13 accordingly provides torque in the same direction which helps the driver to steer the vehicle 15 (schematically depicted in Fig. 2 with systems 13, 14 inside of the vehicle 15).

The torque provided by the powerpack 13 is multiplied by the gearbox 5 and is applied on the column 9 or the rack 11 according to the type of vehicle (truck or small city car). The speed of the steering wheel 8 (imposed by the driver) is multiplied by the gearbox 5 on the powerpack's motor 4. Therefore, EPS motors 4 are used in a big range of speed and of torque as well.

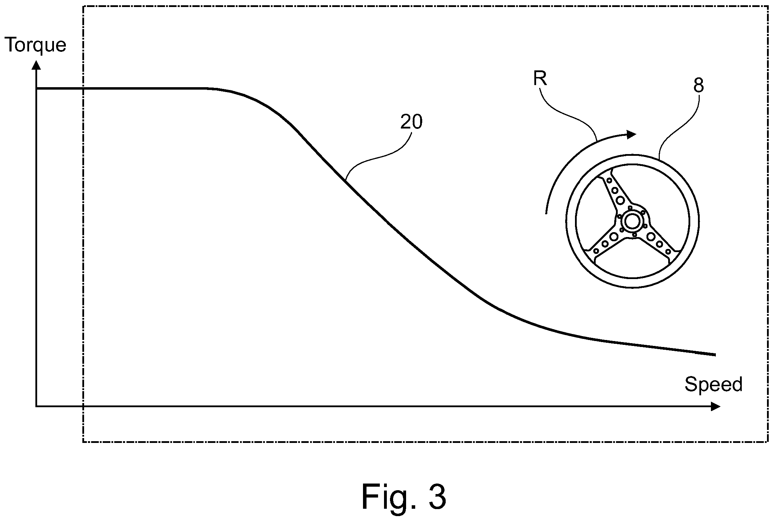

Fig. 3 depicts the typical shape of the first curve 20 representing how much torque (assistance) is available depending on the speed of the steering wheel 8.

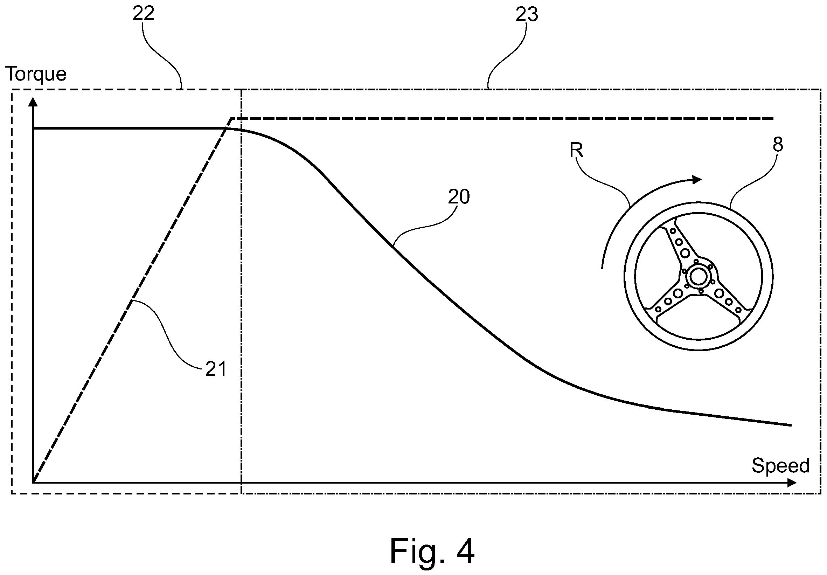

Most of the time, the steering wheel 8 is rotated quite slowly which makes the EPS system 1 operate mostly in the left area 22 of Fig. 4 including the first curve 20. However, during quick maneuvers or during abnormal driving circumstances (such as hitting the side road), the EPS system 1 operates in the right area 23 of the first curve 20. For safety reasons, the EPS system 1 must be able to operate in the motor's complete operating range. For car emission efficiency, the motor 4 must be controlled in the most efficient way, no matter the operating area (even though the EPS system 1 might not be used in the high-speed area that often). Also, the hardware (electric) part of the ECU 3 is designed on the assumption that the EPS system 1 is controlled perfectly (another reason to control the motor 4 as well as possible).

In the left area 22 of Fig. 4, the motor 4 operates in the so-called "normal operating mode". The power depicted as second curve 21 increases linearly, up to a certain speed. From this certain speed in the right area 23, the motor 4 operates in the so-called "flux weakening operating mode", which permits to control the motor 4 in higher speed, for the same power (against losing torque availability).

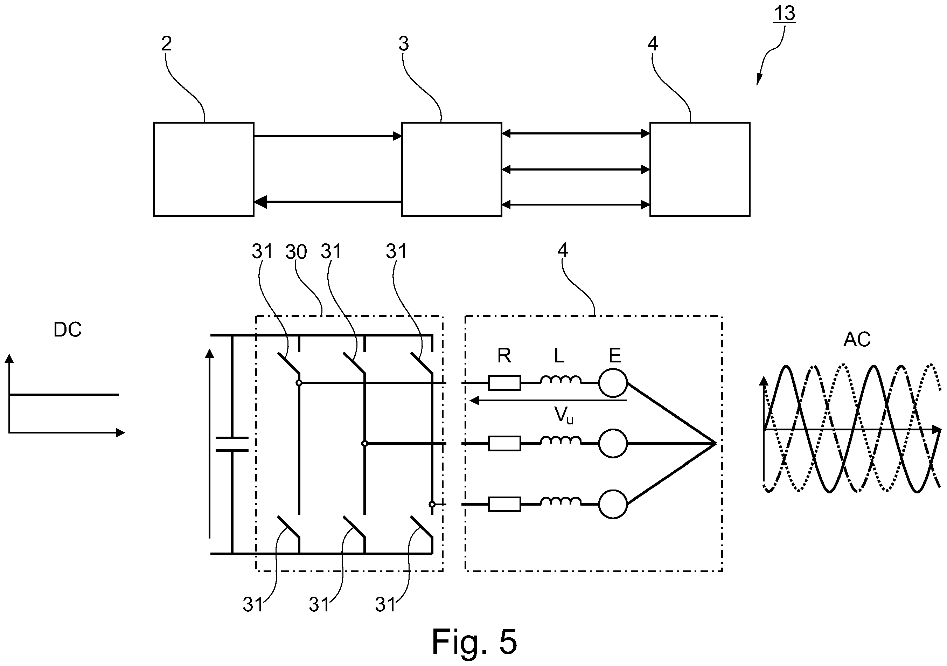

In Fig. 5, the power stage 30, in this case a 3-phase-inverter, of the ECU 3 having six switches 31 is shown in more detail. The power stage 30 allows to shape the DC voltage from the battery 2 into AC sine shapes to apply on each phase of the motor 4. Each phase of the motor 4 can be represented as a RL circuit in series with a voltage source E. This voltage source E has a sine shape at constant motor speed, and its amplitude increases with the motor speed.

A first objective of the motor control is to apply the right voltage across each phase of the motor 4, making sure the phase-to-phase voltage of the motor 4 does not exceed the voltage of the battery 2. Otherwise, the EPS system 1 would not operate in motor mode but rather in generator mode, which would brake the motor 4 and violate safety goals.

Since the hardware designers consider perfect motor control and certain current during certain amount of time in order to choose the right components and thermal dissipation parameters, it is required to not exceed the maximum current allowed in each phase, which is the second objective.

A third objective of the motor control is to keep as much assistance availability as possible (i.e., not limit the assistance too much). OEMs expect to have certain amount of assistance in certain circumstances which requires the motor control to be able to provide as much torque as the motor 4 can do, otherwise it will result in overdesigning the powerpack 13 to be able to comply with the OEM torque-vs-speed requirements.

A fourth objective is to make the control as efficient as possible (i.e., less current for same power provided).

Basically, the motor control is responsible to control the motor 4 in the most efficient way while adapting to its environment (battery voltage, hardware maximum current), but also to follow the driver assistance expectations and avoid making the vehicle 15 consume more fuel to recharge the battery 2 because of the EPS system 1 excess current consumption.

As explained earlier, the first objective of the motor control is to apply the right voltage across the motor phases (for the right torque) while avoiding to have phase-to-phase voltage greater than the battery voltage. However, the voltage induced by the rotation of the motor (so-called "Back-EMF"; referred to as E in Fig. 5) increases linearly with the motor speed, which makes the phase-to-phase voltage increase.

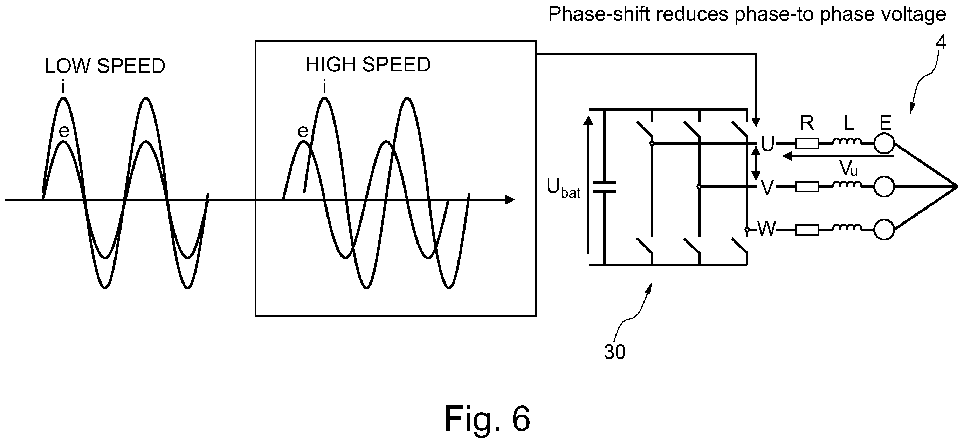

Therefore, as shown in Fig. 6, to avoid an overvoltage, the motor control has the role to induce a phase-shift between the phase current and the phase back-EMF when required (in high speed).

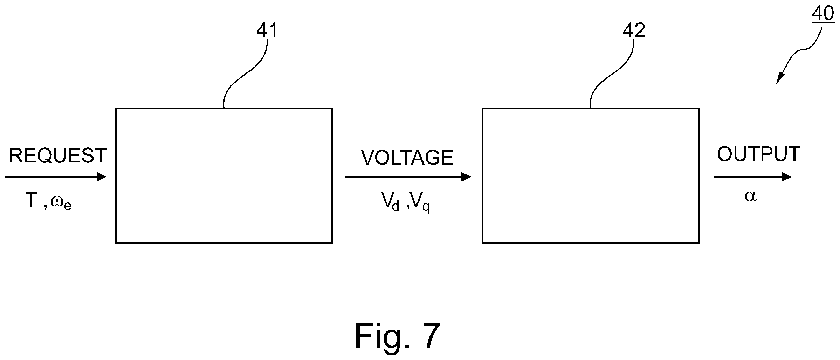

In Fig. 7, the control system 40 for the powerpack 13 is depicted in a simplified way. It may be seen that for a certain torque request and a certain motor speed, a motor control system 41 of the control system 40 will provide voltage ($V_d$, $V_q$) request to have more or less current (for torque T) with more or less phase-shift φ (for phase-to-phase limitation). Then the power stage control system 42 of the control system 40 transforms the voltage request into duty cycles to command the six switches 31 correctly.

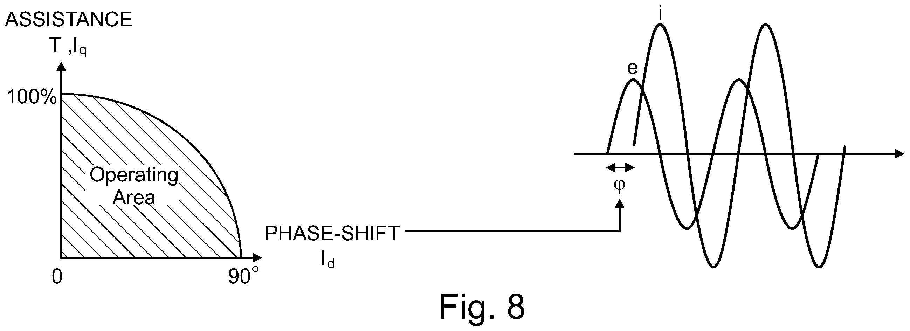

Now, as shown in Fig. 8, the motor control system 41 can be represented as a graph with two axes: how much assistance (Y-axis) can be provided in function of the phase-shift (X-axis) induced between the current and the Back-EMF. The assistance is equivalent to how much torque the motor provides [0 : 100 %]. The phase-shift φ will never exceed 90 degrees.

To control the motor 4 in a simpler way (less CPU load and better system understanding), the electrical components (voltage, current, phases resistance and inductance) may be represented in a Park plan, which may be obtained after a Clarke and Park transformation. These are constant and rotor angle dependent matrices that are multiplied by the three phase components. They are generally known in the art and to the person skilled in the art. The Park plan permits to represent the three phases sinusoidal current into two constant components $I_q$ and $I_d$. The transition from three-phase (temporal) plan to a Clarke/Park plan permits to represent parameters from stator to rotor point of view.

Using the representation of Fig. 8 of the system 40 showing assistance vs phase-shift as explained before, the component $I_q$ can be associated with how much torque T is provided and the component $I_d$ with how much phase-shift is induced.

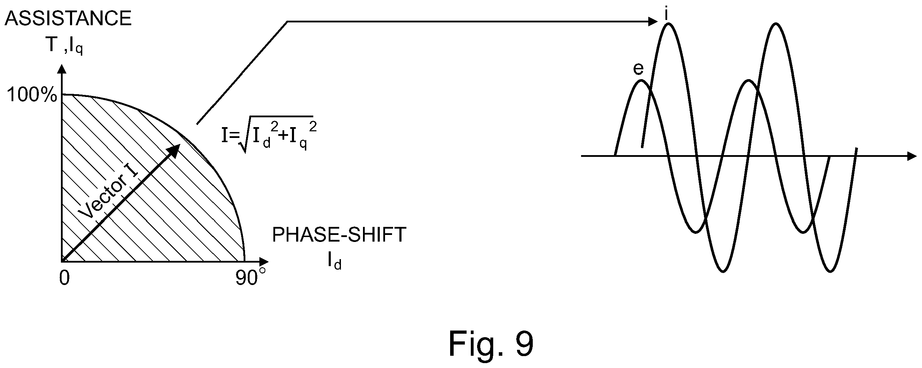

Coming back to the initial issue of handling the phase-to-phase voltage equal or lower than the battery voltage, there also comes the necessity to limit the current flow to what has been expected by the hardware design. The current that flows through each phase of the motor 4 has an amplitude | I | that is equal to the root square of $I_d^2 + I_q^2$, as shown in Fig. 9. This is the reason why when applying some phase-shift, the maximum torque/assistance that can be provided is reduced (with this quarter circle shape).

The motor 4 can operate anywhere in the area of the graph of Fig. 9. But if the motor 4 operates outside of it, the current will be higher than what the hardware has been designed for, and this might risk reducing the life of the ECU 3, cause the ECU 3 to dysfunction or even endanger the driver.

Therefore, operating in this area fulfills the second criteria of the motor control's objectives, which is the hardware limitation.

Once again, when increasing the motor speed $\omega_e$, the Back-EMF's "E" amplitude increases, which increases the phase voltage, which increases the phase-to-phase voltage. Now, increasing the current to Back-EMF phase-shift reduces the phase voltage which reduces the phase-to-phase voltage. By combining both effects, a proper motor control can be created.

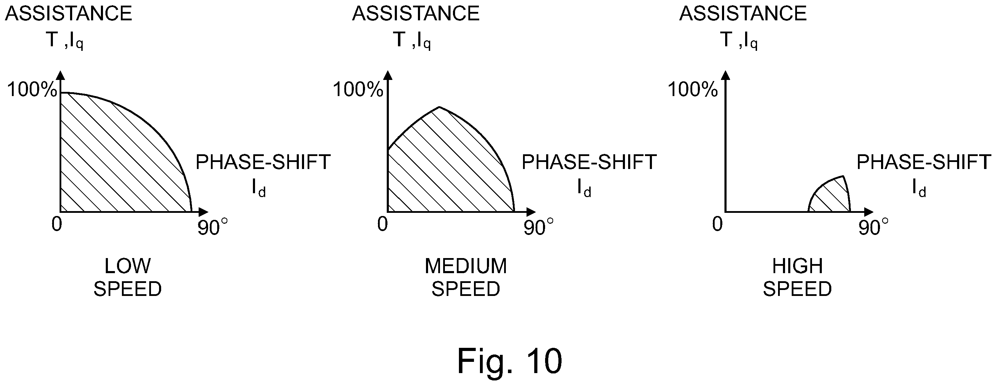

Looking at the operating area, depending on the motor speed $\omega_e$ as depicted in Fig. 10, it can be seen that the operating area shrinks when the motor 4 runs faster. That is explained by the fact that when the speed is so high that the phase-to-phase voltage is greater than the battery voltage, there is no choice but to apply a phase-shift to avoid going in generator mode (phase-to-phase voltage greater than battery voltage).

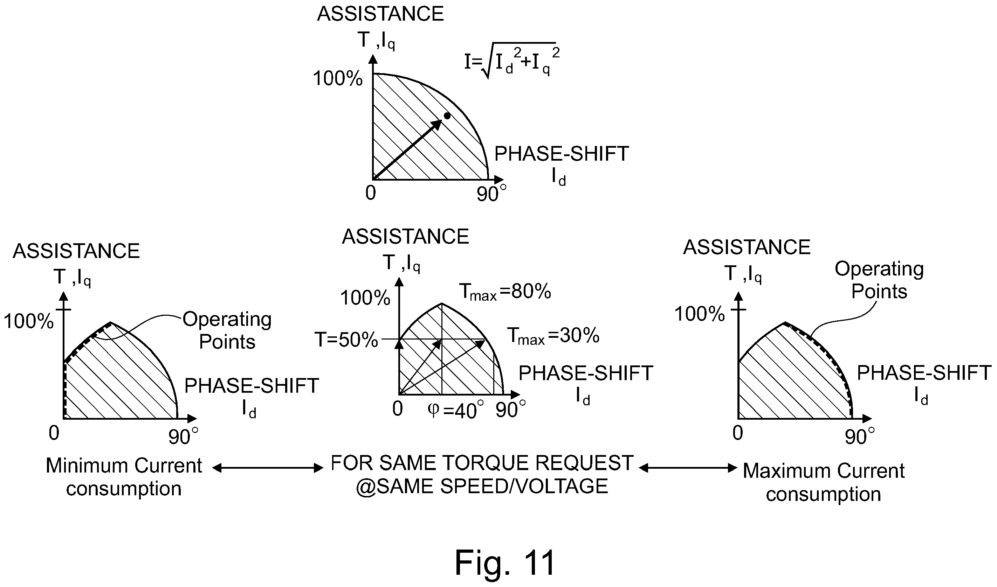

Now, from a strategic point of view, it would be possible to provide 80 % of the assistance by applying 40 ° of phase-shift when the driver needs the most assistance, and to increase the phase-shift along with reducing the torque T applied when the driver does not need much assistance. This is depicted on the right graph of Fig. 11 and would make the motor operate 100 % of the time at maximum current consumption, which would be the least efficient option in terms of motor control.

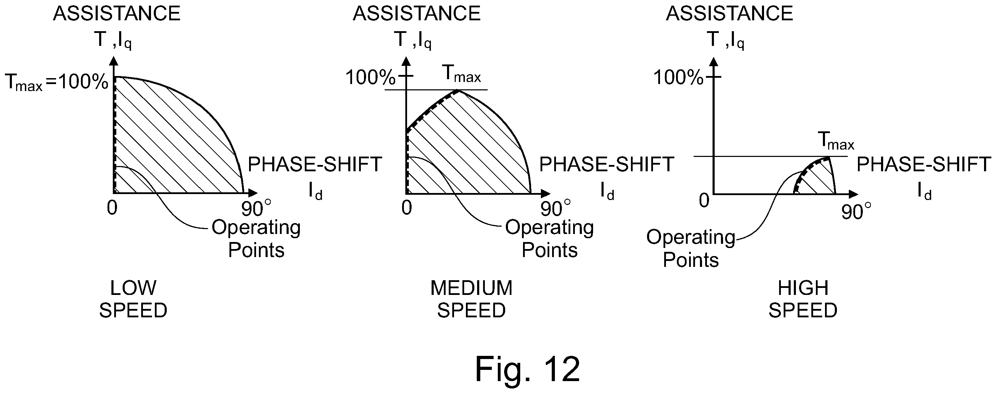

However, if we were closer to the operation according to the graph on the left of Fig. 12 and provide the point where $I = \text{sqrt}(I_d^2 + I_q^2)$ is the minimum, that would be the most efficient way to control the motor 4.

Therefore, by not only operating in the area of the graphs of Fig. 10 for the different speeds, but by operating on the thick lines added to Fig. 10 and represented in Fig. 12, which is the limit where the phase-to-phase peak voltage is equal to the battery voltage, the motor control would fulfill its third and fourth objective, which are to be able to provide as much assistance as possible when needed and be as efficient as possible in terms of current consumption for the same result/assistance.

Now, adding a last difficulty in the motor control: Batteries 2 are never charged at the same level throughout the life of the vehicle 15. Sometimes, the headlamps are on, as well as the radio and other electrical modules which reduce the battery voltage. Other times, the battery 2 is completely charged and the motor 4 together with the alternator recharge the battery 2 which makes its voltage very high. The weather also affects the temperature of the battery 2, which also affects its voltage. All of this has to be considered.

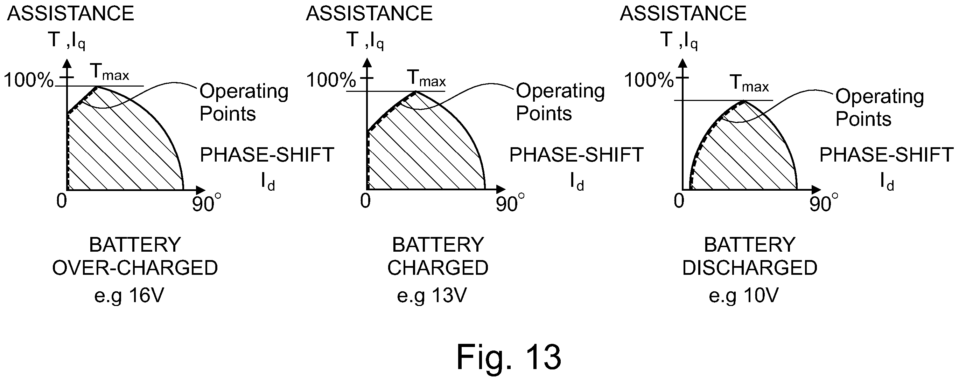

Fig. 13 gives a closer look to the effect of the battery voltage on the operating area of the motor control (for the same speed, here at medium speed). It can be seen that the operating area shrinks when the battery voltage decreases, which gives completely new optimal operating points.

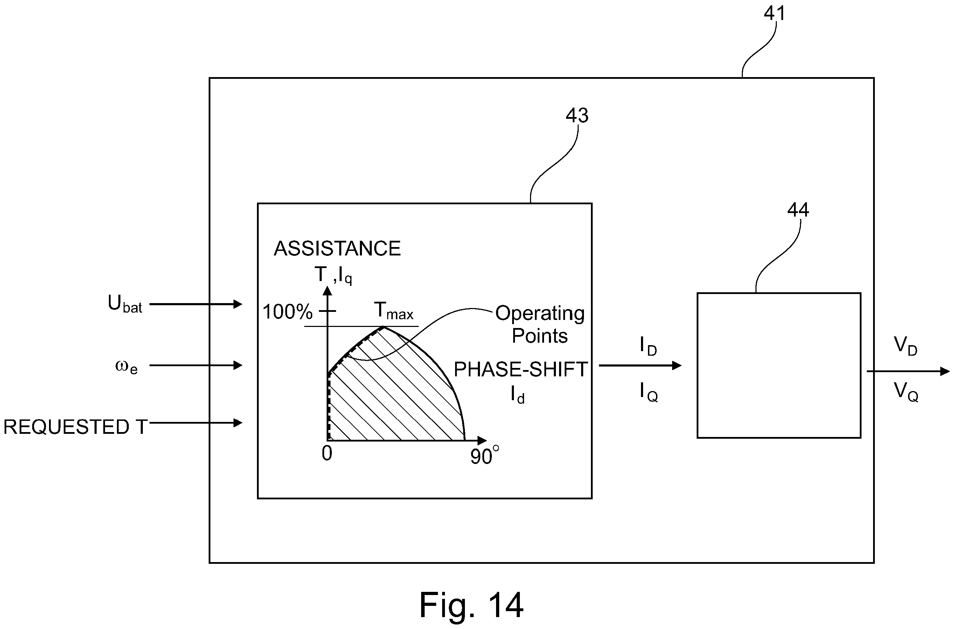

Fig. 14 now gives a detailed schematic illustration of a motor control system 41, which may be used in the control system 40 of Fig. 7. It can be seen that the operating point controller (OPC) 43 in fact depends on three inputs: the torque T request (for the assistance), the rotor speed $\omega_e$ and the battery voltage measured (for the right phase-shift). The OPC 43 provides requests of current $I_D$, $I_Q$ to be applied through each phase, and a regulator/control loop 44 will compare it to the measured current and give voltage requests in the output (for the power stage control 42, see Fig. 7).

Focusing on the OPC 43, the equations for "perfect" motor control require four dimensional/parameters (current, voltage, speed, torque) equations. Now taking into consideration the automotive industry application, the central processing unit (CPU) of the ECU 3, which contains all the numeric motor systems, does not have much memory and does not have a very high operating frequency (much less than a computer processor). Therefore, it is required to simplify algorithms and to find balance between memory and CPU load.

According to the invention, the OPC 43 is now designed for only one reference battery voltage (e.g., 13 V since it is the typical battery voltage when it is charged) to make the OPC 43 a 3-dimensional equations algorithm instead of a 4-dimensional one.

In addition to that, a calibrator 45 is added upstream of the OPC 43 to adjust its input speed in function of the real motor control inputs, so that it will shift the operating points when the battery voltage is higher or lower than the reference one.

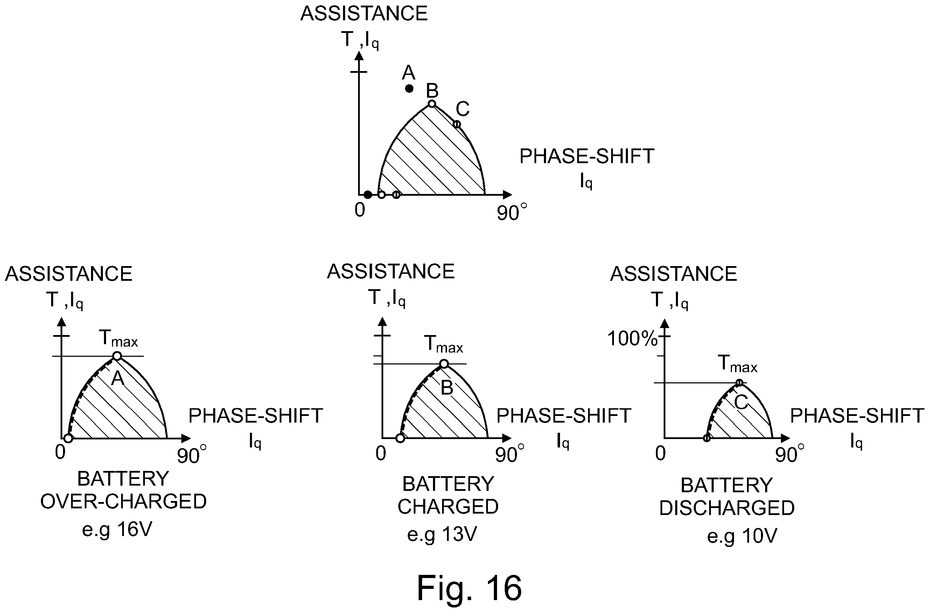

To have an example, it is referred to Fig. 16. It is assumed that speed is constant (in the medium range in the example of Fig. 16). The operating area for several battery voltages is represented. It can be seen that it shrinks when the voltage is lower (as already mentioned before).

But the most important part is that the optimal operating points are completely different (thick lines as before). Representing them on the same figure (as above), the objective of the calibrator 45 is to make the operating point B closer to the operating point A and C when the battery voltage is respectively higher or lower than the reference battery (13 V in this example) because the OPC 43 was designed for only this reference B.

It can be said that Fig. 16 corresponds to the OPC 43 operating area for the reference voltage 13 V. When the voltage is higher, the calibrator 45 has to make the OPC's 43 input speed lower so that its operating area will increase and the point B will be closer to A (which is the optimum). Same principle applies for lower battery voltage.

The OPC's 43 input speed $\omega_e^*$ is calculated by the calibrator 45 by making a ratio between the reference voltage $U_{ref}$ and the battery voltage $U_{bat}$ and doing a linearization in function of the actual speed and this ratio.

The typical equations to control a motor 4 are the following ones:

| Voltage |
|---|
| $V_d = i_d.r - i_q.L_q.\omega_e$ |
| $V_q = \quad i_q.r \quad + i_d.L_d.\omega_e \quad + \dfrac{K_e}{p}.\omega_e$ |
| $\sqrt{V_d{}^2 + V_q{}^2} \leq V_{max} = \dfrac{U_{bat}}{\sqrt{3}}$ |

| Current Limit |
|---|
| $\sqrt{i_d{}^2 + i_q{}^2} \leq I_{max}$ |

| Torque |
|---|
| $T = \dfrac{3}{2}.p.i_q.\left(\varphi_m + \left(L_d - L_q\right).i_d\right)$ |

The state of the art is to make a Clarke/Park transformation of the electrical circuit of the motor phases to represent it in a two-component d and q plan. Adding all the voltage and current limitations, in addition to the torque/currents relation, these equations are obtained.

The calibrator 45 principle proposed herein consists in modifying these equations by making a variable change of the speed $\omega_e$ (replaced by the more complex equation for $\omega_e^*$) and by fixing the battery voltage to a constant $U_{ref}$. Accordingly, make a variable change of $\omega_e$ and set $U_{bat}$ to a reference voltage $U_{ref}$:

| Voltage |
|---|
| $V_d = i_d.r - i_q.L_q.\omega_e^*$ |
| $V_q = \quad i_q.r \quad + i_d.L_d.\omega_e^* \quad + \dfrac{K_e}{p}.\omega_e^*$ |
| $\omega_e^* = f(\omega_e.U_{bat})$ |

(continued)

| Voltage |
|---|
| $$\sqrt{V_d^2 + V_q^2} \leq V_{max} = \frac{U_{ref}}{\sqrt{3}}$$ |

Other motor control methods consist in neglecting the phases resistance and controlling the motor in flux instead of voltages.

| Flux |
|---|
| $\varphi_d = i_q \cdot L_q$<br>$\varphi_q = i_d \cdot L_d + \varphi_m$ |
| $$\sqrt{\varphi_d^2 + \varphi_q^2} \leq \varphi_{max} = \frac{U_{bat}}{\sqrt{3} \cdot \omega_e}$$ |
| |

It is proposed to make a variable change of $\omega_e$ and set $U_{bat}$ to the reference voltage $U_{ref}$:

$$\sqrt{\varphi_d^2 + \varphi_q^2} \leq \varphi_{max} = \frac{U_{ref}}{\sqrt{3} \cdot \omega_e^*}$$

The calibrator 45 operates exactly the same way since the flux is calculated in the input of the OPC 43 by dividing the voltage by the speed. Therefore, calibrating the speed also calibrates the flux.

List of reference signs

1       electronic (vehicle) system, electronic power steering system
2       battery
3       electronic control unit
4       electric motor
5       gearbox
6       motor position sensor
7       torque sensor
8       steering wheel
9       column
10      pinion
11      rack
12      wheel
13      electric system, powerpack
14      mechanical system
15      vehicle
20      first curve
21      second curve
22      left area
23      right area
30      power stage

31      switch
40      control system
41      motor control system
42      power stage control system
43      operating point controller, OPC
44      regulator/control loop
45      calibrator
100     Method

**Claims**

1.  Motor control system (41) for determining an operating point for controlling an electric motor (4) in an electric system (13) comprising a battery (2) and an electronic control unit (3), **characterized in that** the motor control system (41) comprises:

    - a calibrator (45) having an input for receiving a battery voltage ($U_{bat}$) of the battery (2), a motor speed ($\omega_e$) and a requested torque (T) of the electric motor (4), the calibrator (45) being configured to calculate a modified speed ($\omega_e^*$) based on the received battery voltage ($U_{bat}$), the motor speed ($\omega_e$) and the requested torque (T), and
    - an operating point controller (43) having an input for receiving a fixed battery voltage reference ($U_{ref}$), the modified speed ($\omega_e^*$) and the requested torque (T), the operating point controller (43) being configured for determining the operating point for controlling the electric motor (4) based on the received fixed battery voltage reference ($U_{ref}$), the modified speed ($\omega_e^*$) and the requested torque (T).

2.  Motor control system (41) according to claim 1, whereby the operating point is defined by a current ($I_D$, $I_Q$) to be applied through each of the phases of the electric motor (4).

3.  Motor control system (41) according to claim 2, whereby the motor control system (41) further comprises a control loop (44) configured for receiving the determined operating point, comparing the determined operating point to a measured current and output a voltage ($V_D$, $V_Q$) request.

4.  Motor control system (41) according to any of the previous claims, whereby the electric motor (4) is a brushless alternating current motor.

5.  Control system (40) comprising the motor control system (41) according to any of the previous claims, whereby the control system (40) further comprises a power stage control system (42) connected to the motor control system (41).

6.  Control system (40) according to claim 5, whereby the power stage control system (42) is configured to transform a voltage ($V_D$, $V_Q$) request received from the motor control system (41) into duty cycles ($\alpha$) to command switches (31) of a power stage (30) of the electronic control unit (3).

7.  Electronic system (1) comprising a mechanical system (14) and an electric system (13), the electric system (13) having the control system (40) according to claim 5 or 6.

8.  Electronic system (1) according to claim 7, whereby the electronic system (1) is an electronic vehicle system (1).

9.  Electronic system (1) according to claim 7 or 8, whereby the electronic system (1) is an electronic power steering system (1).

10. Vehicle (15) comprising the electronic system (1) according to any of claims 7 - 9.

11. Method for determining an operating point for controlling an electric motor (4) in an electric system (13) comprising a battery (2) and an electronic control unit (3), the method (100) comprising the steps of:

    - receiving a battery voltage ($U_{bat}$) of the battery (2), a motor speed ($\omega_e$) and a requested torque (T) of the electric motor (4), the method **characterized by**:

        - calculating a modified speed ($\omega_e^*$) based on the received battery voltage ($U_{bat}$), motor speed ($\omega_e$) and requested torque (T),

- receiving a fixed battery voltage reference ($U_{ref}$), the modified speed ($\omega_e^*$) and a requested torque (T), and
- determining the operating point for controlling the electric motor (4) based on the received fixed battery voltage reference ($U_{ref}$), the modified speed ($\omega_e^*$) and the requested torque (T).

12. Method according to claim 11, whereby the method further comprises the steps of comparing the determined operating point to a measured current and outputting a voltage ($V_D$, $V_Q$) request.

13. Method according to claim 11 or 12, whereby the method further comprises the steps of transforming a voltage ($V_D$, $V_Q$) request into duty cycles ($\alpha$) and correspondingly commanding switches (31) of a power stage (30) of the electronic control unit (3).

14. A computer program comprising instructions which, when the program is executed by a control system according to any of claims 5-6, cause the control system to carry out the method of any of claims 11 - 13.

15. A computer-readable data carrier having stored thereon the computer program of claim 14.


**Patentansprüche**

1. Motorsteuerungssystem (41) zur Bestimmung eines Arbeitspunktes zur Steuerung eines Elektromotors (4) in einem elektrischen System (13), umfassend eine Batterie (2) und ein elektronisches Steuergerät (3), **dadurch gekennzeichnet, dass** das Motorsteuerungssystem (41) Folgendes umfasst:

- einen Kalibrator (45) mit einem Eingang zum Aufnehmen einer Batteriespannung ($U_{bat}$) der Batterie (2), einer Motorgeschwindigkeit ($\omega_e$) und eines angeforderten Drehmoments (T) des Elektromotors (4), wobei der Kalibrator (45) dazu ausgestaltet ist, eine modifizierte Geschwindigkeit ($\omega_e^*$) auf Grundlage der empfangenen Batteriespannung ($U_{bat}$), der Motorgeschwindigkeit ($\omega_e$) und des angeforderten Drehmoments (T) zu berechnen, und
- eine Arbeitspunktsteuerung (43) mit einem Eingang zum Empfangen einer festen Batteriespannungsreferenz ($U_{ref}$), der modifizierten Geschwindigkeit ($\omega_e^*$) und des angeforderten Drehmoments (T), wobei die Arbeitspunktsteuerung (43) dazu ausgestaltet ist, den Arbeitspunkt zur Steuerung des Elektromotors (4) auf Grundlage der empfangenen festen Batteriespannungsreferenz ($U_{ref}$), der modifizierten Geschwindigkeit ($\omega_e^*$) und des angeforderten Drehmoments (T) zu bestimmen.

2. Motorsteuerungssystem (41) nach Anspruch 1, wobei der Arbeitspunkt definiert ist durch einen Strom (lo, lo), der durch jede der Phasen des Elektromotors (4) anzuwenden ist.

3. Motorsteuerungssystem (41) nach Anspruch 2, wobei das Motorsteuerungssystem (41) ferner einen Regelkreis (44) umfasst, der zum Empfangen des bestimmten Arbeitspunkts, Vergleichen des bestimmten Arbeitspunkts mit einem gemessenen Strom und Ausgeben der Anforderung einer Spannung ($V_D$, $V_Q$) ausgestaltet ist.

4. Motorsteuerungssystem (41) nach einem der vorhergehenden Ansprüche, wobei der Elektromotor (4) ein bürstenloser Wechselstrommotor ist.

5. Steuerungssystem (40), umfassend das Motorsteuerungssystem (41) nach einem der vorhergehenden Ansprüche, wobei das Steuerungssystem (40) ferner ein mit dem Motorsteuerungssystem (41) verbundenes Leistungsstufensteuerungssystem (42) umfasst.

6. Steuerungssystem (40) nach Anspruch 5, wobei das Leistungsstufensteuerungssystem (42) dazu ausgestaltet ist, die Anforderung einer Spannung ($V_D$, $V_Q$), empfangen vom Motorsteuerungssystem (41), in Arbeitszyklen ($\alpha$) umzuwandeln, um Schalter (31) einer Leistungsstufe (30) des elektronischen Steuergeräts (3) zu betätigen.

7. Elektronisches System (1), umfassend ein mechanisches System (14) und ein elektrisches System (13), wobei das elektrische System (13) das Steuerungssystem (40) nach Anspruch 5 oder 6 aufweist.

8. Elektronisches System (1) nach Anspruch 7, wobei das elektronische System (1) ein elektronisches Fahrzeugsystem (1) ist.

9. Elektronisches System (1) nach Anspruch 7 oder 8, wobei das elektronische System (1) ein elektronisches Servolenkungssystem (1) ist.

10. Fahrzeug (15), umfassend das elektronische System (1) nach einem der Ansprüche 7-9.

11. Verfahren zur Bestimmung eines Arbeitspunktes zur Steuerung eines Elektromotors (4) in einem elektrischen System (13), umfassend eine Batterie (2) und ein elektronisches Steuergerät (3), wobei das Verfahren (100) folgende Schritte umfasst:

 - Aufnehmen einer Batteriespannung ($U_{bat}$) der Batterie (2), einer Motorgeschwindigkeit ($\omega_e$) und eines angeforderten Drehmoments (T) des Elektromotors (4), wobei das Verfahren **gekennzeichnet ist durch**:

  - Berechnen einer modifizierten Geschwindigkeit ($\omega_e$*) auf Grundlage der empfangenen Batteriespannung ($U_{bat}$), der Motorgeschwindigkeit ($\omega_e$) und des angeforderten Drehmoments (T),
  - Empfangen einer festen Batteriespannungsreferenz ($U_{ref}$), der modifizierten Geschwindigkeit ($\omega_e$*) und eines angeforderten Drehmoments (T), und
  - Bestimmen des Arbeitspunktes zum Steuern des Elektromotors (4) auf Grundlage der empfangenen festen Batteriespannungsreferenz ($U_{ref}$), der modifizierten Geschwindigkeit ($\omega_e$*) und des angeforderten Drehmoments (T).

12. Verfahren nach Anspruch 11, wobei das Verfahren ferner die Schritte des Vergleichens des bestimmten Arbeitspunkts mit einem gemessenen Strom und Ausgeben der Anforderung einer Spannung ($V_D$, $V_Q$) umfasst.

13. Verfahren nach Anspruch 11 oder 12, wobei das Verfahren ferner die Schritte des Umwandelns der Anforderung einer Spannung ($V_D$, $V_Q$) in Arbeitszyklen (a) und entsprechend ein Betätigen von Schaltern (31) einer Leistungsstufe (30) des elektronischen Steuergeräts (3) umfasst.

14. Computerprogrammprodukt, umfassend Anweisungen, die, wenn das Programm von einem Steuerungssystem nach einem der Ansprüche 5-6 ausgeführt wird, das Steuerungssystem veranlassen, das Verfahren nach einem der Ansprüche 11-13 auszuführen.

15. Computerlesbarer Datenträger, auf dem das Computerprogramm nach Anspruch 14 gespeichert ist.

**Revendications**

1. Système de commande de moteur (41) pour déterminer un point de fonctionnement pour commander un moteur électrique (4) dans un système électrique (13) comprenant une batterie (2) et une unité de contrôle électronique (3), **caractérisé en ce que** le système de commande de moteur (41) comprend :

  - un calibreur (45) doté d'une entrée recevant une tension de batterie ($U_{bat}$) de la batterie (2), un régime moteur ($\omega_e$) et un couple demandé (T) du moteur électrique (4), le calibreur (45) étant configuré pour calculer un régime modifié ($\omega_e$ *) en fonction de la tension de batterie reçue ($U_{bat}$), du régime moteur ($\omega_e$) et du couple demandé (T), et
  - un contrôleur de point de fonctionnement (43) doté d'une entrée recevant une référence de tension de batterie fixe ($U_{réf}$), le régime modifié ($\omega_e$ *) et le couple demandé (T), le contrôleur de point de fonctionnement (43) étant configuré pour déterminer le point de fonctionnement pour la commande du moteur électrique (4) en fonction de la référence de tension de batterie fixe reçue ($U_{réf}$), du régime modifié ($\omega_e$ *) et du couple demandé (T).

2. Système de commande de moteur (41) selon la revendication 1, dans lequel le point de fonctionnement est défini par un courant (lo, lo) à appliquer dans chacune des phases du moteur électrique (4).

3. Système de commande de moteur (41) selon la revendication 2, dans lequel le système de commande de moteur (41) comprend en outre une boucle de commande (44) configurée pour recevoir le point de fonctionnement déterminé, comparer le point de fonctionnement déterminé à un courant mesuré et émettre une demande de tension ($V_D$, $V_Q$).

4. Système de commande de moteur (41) selon l'une des revendications précédentes, dans lequel le moteur électrique (4) est un moteur à courant alternatif sans balais.

5. Système de commande (40) comprenant le système de commande de moteur (41) selon l'une des revendications précédentes, dans lequel le système de commande (40) comporte en outre un système de commande d'étage de puissance (42) connecté au système de commande de moteur (41).

6. Système de commande (40) selon la revendication 5, dans lequel le système de commande d'étage de puissance (42) est configuré pour transformer une requête de tension ($V_D$, $V_Q$) reçue du système de commande du moteur (41) en cycles de service ($\alpha$) pour commander des interrupteurs (31) d'un étage de puissance (30) de l'unité de contrôle électronique (3).

7. Système électronique (1) comprenant un système mécanique (14) et un système électrique (13), le système électrique (13) comportant le système de commande (40) selon la revendication 5 ou 6.

8. Système électronique (1) selon la revendication 7, dans lequel le système électronique (1) est un système de véhicule électronique (1).

9. Système électronique (1) selon la revendication 7 ou 8, dans lequel le système électronique (1) est un système de direction assistée électronique (1).

10. Véhicule (15) comprenant le système électronique (1) selon l'une des revendications 7 à 9.

11. Procédé de détermination d'un point de fonctionnement pour la commande d'un moteur électrique (4) dans un système électrique (13) comprenant une batterie (2) et une unité de contrôle électronique (3), le procédé (100) comprenant les étapes suivantes :

   - réception d'une tension de batterie ($U_{bat}$) de la batterie (2), un régime moteur ($\omega_e$) et un couple demandé (T) du moteur électrique (4), le procédé étant **caractérisé par** :

      - calcul d'un régime modifié ($\omega_e$ *) en fonction de la tension de batterie reçue ($U_{bat}$), du régime moteur ($\omega_e$) et du couple demandé (T),
      - réception d'une référence de tension de batterie fixe ($U_{réf}$), du régime modifié ($\omega_e$ *) et d'un couple demandé (T), et
      - détermination du point de fonctionnement pour commander le moteur électrique (4) en fonction de la référence de tension de batterie fixe ($U_{réf}$), du régime modifié ($\omega_e$ *) et du couple demandé (T) reçus.

12. Procédé selon la revendication **11,** dans lequel le procédé comprend en outre les étapes consistant à comparer le point de fonctionnement déterminé à un courant mesuré et à émettre une demande de tension ($V_D$, $V_Q$).

13. Procédé selon la revendication **11** ou 12, dans lequel le procédé comprend en outre les étapes consistant à transformer une demande de tension ($V_D$, $V_Q$) en cycles de service (a) et à commander en conséquence les interrupteurs (31) d'un étage de puissance (30) de l'unité de contrôle électronique (3).

14. Programme informatique comprenant des instructions qui, lorsque le programme est exécuté par un système de commande selon l'une des revendications 5-6, amènent le système de commande à exécuter le procédé selon l'une des revendications **11 à** 13.

15. Support de données lisible par ordinateur sur lequel est stocké le programme informatique de la revendication 14.

Fig. 1

Fig. 2

EP 4 406 108 B1

Fig. 3

Fig. 4

EP 4 406 108 B1

Fig. 5

EP 4 406 108 B1

Fig. 6

REQUEST
$T, \omega_e$

41

VOLTAGE
$V_d, V_q$

42

40

OUTPUT
$\alpha$

Fig. 7

Fig. 8

EP 4 406 108 B1

ASSISTANCE
$T, I_q$

100%

$I=\sqrt{I_d{}^2+I_q{}^2}$

Vector I

PHASE-SHIFT
$I_d$

0                    90°

i

e

EP 4 406 108 B1

Fig. 9

ASSISTANCE
T ,I$_q$

100%

PHASE-SHIFT
I$_d$

0                90°

LOW
SPEED

ASSISTANCE
T ,I$_q$

100%

PHASE-SHIFT
I$_d$

0                90°

MEDIUM
SPEED

ASSISTANCE
T ,I$_q$

100%

PHASE-SHIFT
I$_d$

0                90°

HIGH
SPEED

Fig. 10

EP 4 406 108 B1

Fig. 11

Fig. 12

EP 4 406 108 B1

Fig. 13

Fig. 14

EP 4 406 108 B1

41

44

$V_D$  $V_Q$

$I_D$  $I_Q$

43

ASSISTANCE
T, $I_q$

100%

PHASE-
SHIFT
$I_d$

0    90°

Operating
Points

$U_{ref}$

MODIFIED $\omega_e^*$

REQUESTED T

45

$U_{bat}$

$\omega_e$

REQUESTED T

Fig. 15

Fig. 16

**EP 4 406 108 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006055363 A1